# FASCICULE DE BREVET EUROPEEN

(11) **EP 0 455 557 B1**
(45) Date de publication et mention de la délivrance du brevet: **10.03.1993**
(21) Numéro de dépôt: 91401157.2
(22) Date de dépôt: 02.05.1991
(51) Int. Cl.: B60H 1/00, F25D 17/06

(54) **Installation de chauffage et/ou de climatisation à deux pulseurs d'air pour véhicule automobile**
Einbauanordnung zweier Lüfter einer Heiz- und/oder Klimaanlage für ein Kraftfahrzeug
Arrangement of two ventilators for heating and/or air conditioning in a vehicle

(30) Priorité: 04.05.1990 FR 9005680
(43) Date de publication de la demande: 06.11.1991
(73) Titulaire: VALEO THERMIQUE HABITACLE, 78320 Le Mesnil-Saint-Denis (FR)
(72) Inventeur: Becquerel, Michel, F-78320 Le Mesnil-Saint-Denis (FR); Loup, Didier, F-78310 Maurepas (FR)
(74) Mandataire: Gamonal, Didier

(56) Documents cités:
- FR-A- 2 623 757
- US-A- 2 149 382
- US-A- 2 496 652
- US-A- 2 904 316

## Description

L'invention concerne une installation de chauffage et/ou de climatisation pour véhicule automobile, comprenant deux pulseurs d'air -encore appelés "groupes motoventilateurs"-propres à envoyer deux flux d'air frais sur un même échangeur de chaleur à l'intérieur d'un boîtier de distribution. Une telle installation est connue par exemple de FR-A- 2.623.757.

Cet échangeur de chaleur peut être un simple radiateur de chauffage dans le cas d'un appareil de chauffage de véhicule, ou bien un évaporateur suivi d'un radiateur de chauffage, dans le cas d'un appareil de climatisation. En ce cas, l'air frais extérieur traverse d'abord l'évaporateur pour y être éventuellement refroidi et ensuite le radiateur de chauffage pour y être éventuellement réchauffé.

On utilise habituellement des installations de ce genre dans certaines catégories de véhicules automobiles dont le volume de l'habitacle est important et nécessite, de ce fait, un débit d'air de chauffage et/ou de climatisation plus élevé que dans le cas des véhicules classiques.

En effet, il est apparu préférable d'utiliser deux pulseurs dont les débits s'additionnent, plutôt qu'un seul pulseur assurant le débit d'air élevé requis.

Pour offrir un tel débit d'air avec un seul pulseur, il faudrait concevoir un pulseur spécifique qui ne pourrait pas être utilisé sur les véhicules classiques qui serait particulièrement encombrant et en outre génèrerait des bruits de fonctionnement.

Par contre, en faisant appel à deux pulseurs, on peut utiliser des pulseurs standards, c'est-à-dire trouvant une application sur des véhicules de grande diffusion, et qui de surcroît présentent un faible encombrement.

Cependant, l'utilisation de deux pulseurs dans une même installation présente un inconvénient dû au fait que les pulseurs présentent une dispersion de fabrication importante.

Ces pulseurs sont animés par des moteurs électriques à courant continu et, à tension électrique égale, deux pulseurs peuvent avoir des débits d'air très différents.

Il en résulte qu'il est impossible d'appareiller deux pulseurs pour qu'ils aient rigoureusement le même débit, si bien que le débit d'air qui traverse l'échangeur de chaleur n'est pas homogène sur toute sa surface.

En pratique, les deux flux d'air issus respectivement des deux pulseurs sont canalisés par des aubes qui sont perpendiculaires à la direction d'introduction des deux flux et qui sont propres à les diriger respectivement vers deux moitiés de l'échangeur, habituellement une moitié droite et une moitié gauche.

Il en résulte alors que le débit d'air qui circule à travers l'une des moitiés n'est pas le même que celui qui circule à travers l'autre.

Cet inconvénient peut être en outre aggravé par le fait que les deux pulseurs sont généralement reliés au boîtier par l'intermédiaire de deux conduites qui n'ont pas nécessairement la même configuration et donc pas la même perte de charge.

L'invention a notamment pour but de remédier à cet inconvénient.

Elle propose, en conséquence, une installation du type défini en introduction, dans laquelle le boîtier ménage deux sections d'entrée disposées en vis-à-vis et propres à être reliées respectivement aux deux pulseurs pour introduire, dans le boîtier, les deux flux d'air suivant des directions d'introduction parallèles et de sens opposés, et parallèlement à une paroi de fond du boîtier, la paroi de fond étant munie d'une cloison de séparation qui fait saillie vers l'intérieur du boîtier et qui présente une direction générale proche de la direction d'introduction des deux flux le long de la paroi de fond, ce qui permet de définir deux chambres qui s'étendent sensiblement sur la même largeur dans ladite direction d'introduction et qui débouchent sur une section de sortie propre à être reliée à l'échangeur de chaleur.

De ce fait, on peut canaliser les deux flux d'air à l'intérieur du boîtier dans deux chambres adjacentes qui s'étendent sensiblement sur la même largeur dans la direction d'introduction des deux flux.

En disposant les deux sections d'entrée respectivement à droite et à gauche du boîtier, les deux chambres définies dans celui-ci peuvent être en relation superposée verticalement, si bien que l'on obtient un premier flux d'air qui traverse la moitié inférieure de l'échangeur et un second flux d'air qui traverse la moitié supérieure de l'échangeur.

Même si les débits de ces deux flux présentent une disparité importante, celle-ci n'est pas gênante car elle ne nuit pas à la répartition des deux flux respectivement du côté droit et du côté gauche de l'habitacle.

Dans une forme de réalisation préférée de l'invention, le boîtier est de forme générale parallélépipédique et comprend une paroi de fond rectangulaire et quatre parois latérales rattachées à la paroi de fond, à savoir deux parois latérales longitudinales et deux parois latérales transversales, les deux sections d'entrée étant formées respectivement dans les deux parois transversales, et les quatre parois latérales définissant ensemble une face ouverte rectangulaire qui constitue la section de sortie du boîtier.

Avantageusement, la direction générale de la cloison correspond sensiblement à la direction d'une diagonale du rectangle.

Ainsi, il est tout particulièrement avantageux de prévoir que les deux parois latérales longitudinales soient disposées sensiblement à l'horizontale et soient de longueur plus grande que les parois latérales transversales qui sont alors disposées sensiblement à la verticale. De ce fait, la direction générale de la cloison est faiblement inclinée par rapport à l'horizontale et permet une superposition verticale des deux chambres avec les avantages mentionnés précédemment.

Dans une des formes de réalisation de l'invention, la paroi de fond comprend une partie centrale qui s'étend dans une direction générale correspondant à une diagonale et qui se prolonge par deux extrémités incurvées aboutissant sur deux côtés opposés du rectangle, qui correspondent avantageusement aux parois latérales longitudinales du boîtier.

Dans une autre forme de réalisation de l'invention, la paroi de fond comprend une partie rectiligne unique qui s'étend dans une direction proche de celle d'une diagonale du rectangle et qui aboutit sur deux côtés opposés du rectangle, qui correspondent avantageusement aux parois transversales du boîtier.

La cloison du boîtier comprend avantageusement deux faces arrondies qui se raccordent à la paroi de fond et qui se raccordent entre elles le long d'une arête, lesdites faces arrondies permettant de changer la direction des deux flux d'air pour les canaliser vers la section de sortie.

Pour faciliter cette canalisation, la paroi de fond comprend de préférence, dans chacune des deux chambres, au moins un organe déflecteur ou répartiteur pour permettre le changement de la direction d'écoulement du flux.

Avantageusement, la paroi de fond, y compris la cloison de séparation et ses organes déflecteurs éventuels, est amovible.

Avantageusement, le boîtier forme un logement propre à recevoir directement un échangeur de chaleur, en particulier un évaporateur si l'installation permet la climatisation. En ce cas, il est tout particulièrement avantageux que le boîtier comprenne un conduit pour l'évacuation des condensats formés dans l'échangeur de chaleur.

L'installation de l'invention peut comprendre en outre, de manière en soi connue, un volet de mixage pour assurer la répartition de l'air issu de la section de sortie entre une branche de transmission d'air frais et une branche de réchauffage d'air. En ce cas, le volet de mixage est avantageusement monté à pivotement autour d'un axe parallèle à la direction d'introduction des deux flux d'air dans le boîtier.

Dans la description qui suit, faite seulement à titre d'exemple, on se réfère aux dessins annexés, sur lesquels :
- la figure 1 est une vue schématique de dessus d'une installation de chauffage et/ou de climatisation à deux pulseurs d'air selon la technique antérieure;
- la figure 2 est une vue en élévation d'une partie d'une installation de chauffage et/ou de climatisation selon l'invention;
- la figure 3 est une vue en perspective du boîtier de l'installation de la figure 2;
- la figure 4 est une vue en perspective éclatée du boîtier de la figure 3;
- la figure 5 est une vue en coupe de la paroi de fond du boîtier selon la ligne V-V de la figure 4;
- la figure 6 est une vue partielle en coupe longitudinale d'une installation selon l'invention; et
- la figure 7 est une vue en élévation d'une partie d'une installation selon l'invention, dans une autre forme de réalisation.

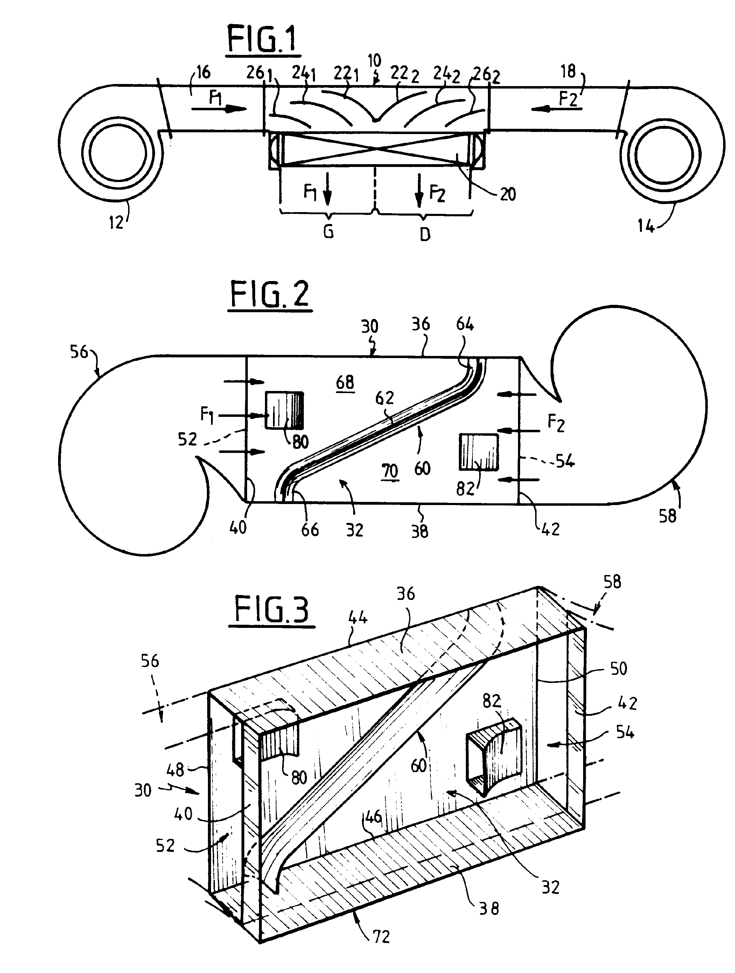

On se réfère tout d'abord à la figure 1 qui montre une installation de chauffage et/ou de climatisation selon la technique antérieure. Cette installation comprend un boîtier 10 relié à deux pulseurs 12 et 14, situés respectivement du côté gauche et du côté droit d'un véhicule automobile, respectivement par l'intermédiaire de deux conduites 16 et 18 qui n'ont pas nécessairement la même configuration. Le boîtier 10 reçoit intérieurement un échangeur de chaleur 20 qui peut être, par exemple, un évaporateur propre à assurer la climatisation de l'habitacle du véhicule automobile.

Les pulseurs 12 et 14 sont propres à envoyer deux flux d'air frais, provenant de l'extérieur de l'habitacle, à l'intérieur du boîtier 10 qui canalise ensuite ces deux flux grâce à des aubes 22₁, 24₁, 26₁ situées du côté gauche du boîtier et des aubes 22₂, 24₂ et 26₂ situées du côté droit du boîtier. Ces aubes ont des formes générales incurvées et possèdent des génératrices parallèles entre elles et perpendiculaires à la direction d'écoulement des flux F1 et F2 lors de leur introduction dans le boîtier 10.

Du fait des dispersions de fabrication, les pulseurs 12 et 14 peuvent avoir des débits très différents, si bien que les flux F1 et F2 traversant respectivement la moitié gauche et la moitié droite de l'échangeur 20 peuvent avoir des valeurs très différentes, en pouvant être encore accrue par le fait que les conduites 16 et 18 n'ont pas nécessairement la même configuration. Cette différence de débit entraîne une différence de température à la sortie de la face de l'échangeur 20.

On se réfère maintenant aux figures 2 et 3 qui montrent en partie une installation de chauffage et/ou de climatisation selon l'invention.

Cette installation comprend un boîtier 30 de forme générale parallélépipédique comprenant une paroi de fond rectangulaire 32 et quatre parois latérales rattachées à la paroi de fond : deux parois latérales longitudinales 36 et 38 parallèles entre elles et avantageusement disposées à l'horizontale, et deux parois latérales transversales 40 et 42 parallèles entre elles et avantageusement disposées à la verticale. Les parois 36 et 38 se raccordent à la paroi de fond 32 respectivement par des arêtes 44 et 46 qui constituent les deux grands côtés du rectangle. Les deux petits côtés du rectangle sont matérialisés par des bords 48 et 50 qui ne sont pas rattachés directement aux parois 40 et 42. En effet, ces parois forment respectivement deux sections d'entrée 52 et 54 disposées en vis-à-vis l'une de l'autre (figure 3). Ces deux sections ont chacune une forme rectangulaire et s'étendent sur une hauteur correspondant à celle des bords 48 et 50 et sur une largeur inférieure à la profondeur du boîtier. Les sections d'entrée 52 et 54 sont propres à être reliées respectivement à deux pulseurs 56 et 58 situés respectivement du côté gauche et du côté droit du boîtier. Les pulseurs 56 et 58 sont propres à introduire, dans le boîtier 30, deux flux d'air suivant des directions d'introduction respectivement F1 et F2, parallèles et de sens opposés, et parallèlement à la paroi de fond 32 du boîtier (figure 2).

La paroi de fond 32 est munie d'une cloison de séparation 60 qui fait saillie vers l'intérieur du boîtier et qui présente une direction générale proche de la direction d'introduction F1 et F2 des deux flux le long de la paroi de fond 32. Dans l'exemple, la cloison 60 comprend une partie centrale 62 qui s'étend dans une direction générale correspondant à une diagonale du rectangle constituant la paroi de fond 32, et qui se prolonge par deux extrémités incurvées 64 et 66 aboutissant sur deux côtés opposés du rectangle, qui correspondent respectivement aux parois longitudinales 36 et 38 du boîtier (figure 2). La cloison 62 forme ainsi à l'intérieur du boîtier deux chambres distinctes 68 et 70 (figure 2) alimentées respectivement par les pulseurs 56 et 58 et s'étendant sensiblement sur la même largeur dans la direction générale d'introduction F1 et F2. Ces deux chambres débouchent sur une section de sortie 72 (figure 3), de forme générale rectangulaire, qui constitue une face ouverte du boîtier 30 et qui est limitée par les quatre parois latérales 36, 38, 40 et 42.

La section de sortie 72 est propre à accueillir un échangeur de chaleur (non représenté) propre à être traversé par les flux d'air extérieur issus respectivement des pulseurs 56 et 58. Pour cela, les flux d'air doivent subir un changement de direction à angle droit à l'intérieur du boîtier.

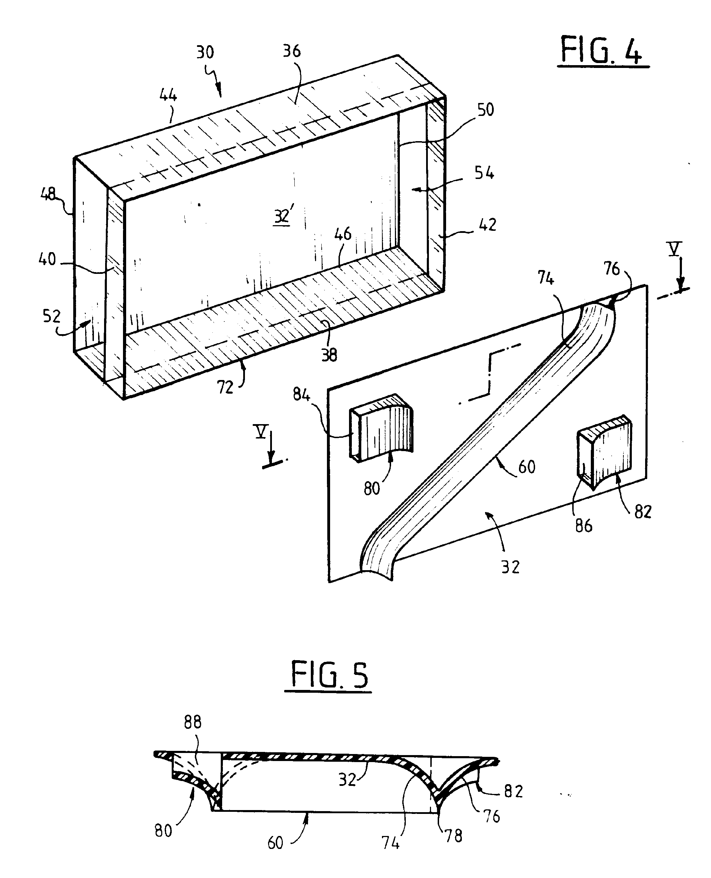

Comme montré à la figure 4, la paroi de fond 32 est avantageusement amovible et propre à être appliquée contre une paroi 32′ qui constitue en fait la véritable paroi de fond du boîtier 30.

Pour faciliter le changement de direction des flux F1 et F2 à l'intérieur du boîtier, la cloison 60 comprend (figure 5) deux faces arrondies 74 et 76 qui se raccordent à la paroi de fond 32 et qui se raccordent entre elles le long d'une arête 78.

Pour faciliter le changement de direction des deux flux, il est prévu en outre deux organes déflecteurs ou répartiteurs 80 et 82 (figures 2 à 5) situés respectivement de part et d'autre de la cloison 60 dans la région des chambres 68 et 70. Ces deux organes ont également une forme arrondie et ménagent respectivement des passages 84 et 86 dont la section va progressivement en s'évasant depuis l'entrée jusqu'à la sortie. On comprendra que le flux d'air envoyé par le pulseur 56 s'écoule le long de la paroi de fond 32 et est dévié par la paroi incurvée 74, tandis qu'une partie est déviée par l'organe déflecteur 80.

De façon correspondante, le flux d'air envoyé par le pulseur 54 s'écoule le long de la paroi de fond 32 et est finalement dévié par la paroi incurvée 76 de la cloison 60. Une partie du flux est également déviée par l'organe déflecteur 82.

Comme montré aux figures 4 et 5, la paroi 32, y compris la cloison 60 et les organes déflecteurs 80 et 82, peuvent être formés d'une seule pièce par moulage d'une matière plastique. La paroi de fond 32 comprend alors des découpes rectangulaires, par exemple une découpe 88 en regard de l'organe déflecteur 80 pour permettre le démoulage. La présence de ces deux découpes n'est pas gênante, étant donné que la paroi de fond 32 est ensuite rapportée sur la paroi 32′.

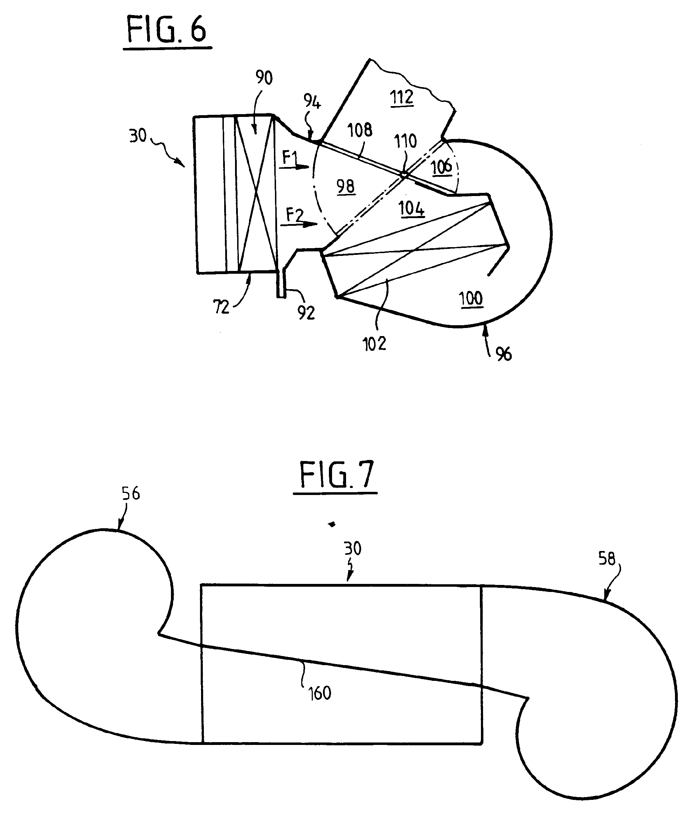

On se réfère maintenant à la figure 6. Dans la section de sortie 72 du boîtier 30 est logé un échangeur de chaleur 90 qui, dans l'exemple, est un évaporateur d'une installation de climatisation. Le boîtier 30 comprend, en partie inférieure, un tuyau 92 propre à permettre l'évacuation des condensats formés dans l'échangeur de chaleur 90.

Dans l'exemple, le flux d'air F1 provenant du pulseur 56 traverse pour l'essentiel la moitié supérieure de l'échangeur 90, tandis que le flux F2 provenant du pulseur 58 traverse la moitié inférieure de l'échangeur. Même si les pulseurs 56 et 58 ont des caractéristiques de débit différentes, et que les débits d'air qui traversent respectivement la partie supérieure et la partie inférieure de l'échangeur 90 sont différentes, ceci ne constitue pas un inconvénient du fait que ces deux flux sont superposés et qu'il n'existe donc pas de disparité entre les moitiés droite et les moitiés gauche de l'échangeur. Dans l'installation représentée à la figure 6, la section de sortie 72 du boîtier 30 se raccorde sur une section d'entrée 94 d'un autre boîtier 96 de structure en soi connue. Ce boîtier 96 définit intérieurement une branche 98 de transmission d'air frais et une branche 100 de réchauffage d'air. Cette dernière a une configuration en U et comprend un échangeur de chaleur 102 constitué par un radiateur de chauffage. La branche 100 comprend une section d'entrée 104 et une section de sortie 106 qui débouchent respectivement en amont et en aval de la branche 98. Un volet de mixage 108 monté à pivotement autour d'un axe 100 permet de faire varier la répartition entre les branches 98 et 100 de l'air qui entre dans le boîtier 96 et, par conséquent, la température de l'air qui s'échappe de ce boîtier. Dans la position du volet représentée en trait plein sur la figure 6, tout le débit d'air passe par la branche 100 et est ainsi réchauffé. Dans l'autre position extrême représentée en trait interrompu, l'air s'écoule uniquement par la branche 98 sans être réchauffé. Bien entendu, le volet 108 peut prendre toute position intermédiaire. L'air frais ou réchauffé parvient à une zone de mixage 112 qui est propre à alimenter ensuite, de manière en soi connue, différentes bouches de distribution à l'intérieur de l'habitacle. Dans l'exemple, l'axe 110 du volet 108 est horizontal et donc parallèle à la direction d'introduction des deux flux F1 et F2 par les sections d'entrée du boîtier. Par conséquent, si les débits des flux d'air qui traversent respectivement la moitié supérieure et la moitié inférieure de l'échangeur 90 sont différents, cette différence n'est pas gênante puisqu'elle peut être compensée par le volet 108.

On se réfère maintenant à la figure 7 qui montre une autre forme de réalisation de l'invention dans laquelle la cloison 160 comprend une partie rectiligne unique qui s'étend dans une direction proche de celle d'une diagonale du rectangle et qui aboutit sur deux côtés opposés du rectangle, qui correspondent aux parois transversales 40 et 42.

## Revendications

1. Installation de chauffage et/ou de climatisation pour véhicule automobile, comprenant deux pulseurs d'air (56,58) propres à envoyer respectivement deux flux d'air frais sur un même échangeur de chaleur (90) à l'intérieur d'un boîtier (30), caractérisée en ce que le boîtier (30) ménage deux sections d'entrée (52,54) disposées en vis-à-vis et propres à être reliées respectivement aux deux pulseurs pour introduire, dans le boîtier, les deux flux d'air suivant des directions d'introduction (F1 et F2) parallèles et de sens opposés, et parallèlement à une paroi de fond (32) du boîtier (30), en ce que la paroi de fond (32) est munie d'une cloison de séparation (60) qui fait saillie vers l'intérieur du boîtier (30) et qui présente une direction générale proche de la direction d'introduction des deux flux le long de la paroi de fond (32), ce qui permet de définir deux chambres (68,70) qui s'étendent sensiblement sur la même largeur dans ladite direction d'introduction et qui débouchent sur une section de sortie (72) propre à être reliée à l'échangeur de chaleur.

2. Installation selon la revendication 1, caractérisée en ce que le boîtier (30) est de forme générale parallélépipédique et comprend une paroi de fond rectangulaire (32) et quatre parois latérales rattachées à la paroi de fond, à savoir deux parois latérales longitudinales (36,38) et deux parois latérales transversales (40,42), en ce que les deux sections d'entrée (52,54) sont définies respectivement dans les deux parois transversales (40,42) et en ce que les quatre parois latérales forment ensemble une face ouverte rectangulaire (72) qui constitue la section de sortie du boîtier.

3. Installation selon l'une des revendications 1 et 2, dans laquelle la paroi de fond (32) est de forme générale rectangulaire, caractérisée en ce que la direction générale de la cloison (60) correspond sensiblement à la direction d'une diagonale du rectangle.

4. Installation selon la revendication 3, caractérisée en ce que la cloison (60) comprend une partie centrale (62) qui s'étend dans une direction générale correspondant à une diagonale du rectangle et qui se prolonge par deux extrémités incurvées (64,66) aboutissant sur deux côtés opposés du rectangle, qui correspondent aux parois longitudinales (36,38).

5. Installation selon la revendication 3, caractérisée en ce que la cloison (160) comprend une partie rectiligne unique qui s'étend dans une direction proche de celle d'une diagonale du rectangle et qui aboutit sur deux côtés opposés du rectangle, qui correspondent aux parois transversales (36,38) du boîtier.

6. Installation selon l'une des revendications 1 à 5, caractérisée en ce que la cloison (60) comprend deux faces arrondies (74,76) qui se raccordent à la paroi de fond et qui se raccordent entre elles le long d'une arête (78), ce qui permet de changer la direction des deux flux.

7. Installation selon l'une des revendications 1 à 6, caractérisée en ce que la paroi de fond (32) comprend, dans la région de chacune des deux chambres (68,70), au moins un organe répartiteur (80,82) propre à changer la direction d'écoulement du flux d'air.

8. Installation selon l'une des revendications 1 à 7, caractérisée en ce que la paroi de fond (32) est amovible.

9. Installation selon l'une des revendications 1 à 8, caractérisée en ce que le boîtier (30) forme un logement propre à recevoir directement un échangeur de chaleur (90), en particulier un évaporateur, et comprend dans ce cas un conduit (92) d'évacuation des condensats.

10. Installation selon l'une des revendications 1 à 9, comprenant en outre un volet de mixage (108) propre à répartir l'air issu de la section de sortie (72) entre une branche (98) de transmission d'air frais et une branche (100) de réchauffage d'air, caractérisée en ce que le volet (108)est monté à pivotement autour d'un axe (110) parallèle à la direction d'introduction des deux flux (F1 et F2) dans les sections d'entrée (52,54) du boîtier (30).

## Patentansprüche

1. Heiz- und/oder Klimmaanlage für eine Kraftfahrzeug, enthaltend zwei Lüfter (56, 58), die geeignet sind, zwei Frischluftströme dem gleichen Wärmeaustauscher (90) in Innern eines Gehäuses (30) zuzuleiten, **dadurch gekennzeichnet**, daß das Gehäuse (30) zwei Einströmteile (52, 54) aufweist, die einander gegenüberliegen und jeweils mit den beiden Lüftern verbunden werden können, um in das Gehäuse die beiden Luftströme in Einströmrichtungen (F1 und F2) einzuleiten, die parallel zueinander und in entgegengesetzter Richtung sowie parallel zu einer Rückwand (32) des Gehäuses (30) verlaufen, daß die Rückwand (32) mit einer Trennwand (60) versehen ist, die in das Innere des Gehäuses (30) vorspringt und die eine allgemeine Richtung hat, die sich der Einleitungsrichtung der beiden Ströme längs der Rückwand (32) annähert, wodurch zwei Kammern (68, 70) begrenzt werden, die sich im wesentlichen über die gleiche Breite in der gleichen Einleitungsrichtung erstrecken und die in einen Ausströmteil (72) einmünden, der mit dem Wärmeaustauscher verbunden werden kann.

2. Anlage nach Anspruch 1, **dadurch gekennzeichnet,** daß das Gehäuse (30) von allgemein parallflacher Form ist und eine rechteckige Rückwand (32) und vier Seitenwände enthält, die an der Rückwand befestigt sind, nämlich zwei seitliche Längswände (36, 38) und zwei seitliche Querwände (40, 42), daß die beiden Einströmteile (52, 54) jeweils in den beiden Querwänden (40, 42) begrenzt sind und daß die vier Seitenwände zusammen eine rechteckige offene Fläche (72) bilden, die den Ausströmteil des Gehäuses ausmacht.

3. Anlage nach einem der Ansprüche 1 und 2, worin die Rückwand (32) von allgemein rechteckiger Form ist, **dadurch gekennzeichnet,** daß die allgemeine Richtung der Trennwand (60) im wesentlichen der Richtung einer Diagonale des Rechtecks entspricht.

4. Anlage nach Anspruch 3, **dadurch gekennzeichnet,** daß die Trennwand (60) einen Mittelteil (62) enthält, der sich in einer allgemein Richtung erstreckt, welche einer Diagonale des Rechtecks entspricht und sich in zwei einwärts gekrümmten Enden (64, 66) fortsetzt, die an zwei einander gegenüberliegende Seiten des Rechtecks anstoßen, welche den Längswänden entsprechen (36, 38).

5. Anlage nach Anspruch 3, **dadurch gekennzeichnet,** daß die Trennwand (160) einen einzeigen geraden Teil enthält, der sich in einer Richtung erstreckt, welche sich derjenigen einer Diagonalen des Rechtecks annähert und der an zwei einander gegenüberliegende Seiten des Rechtecks anstößt, die den Querwänden (36, 38) des Gehäuses entsprechen.

6. Anlage nach einem der Ansprüche 1 bis 5, **dadurch gekennzeichnet,** daß die Trennwand (60) zwei abgerundete Flächen (74, 76) enthält, die mit der Rückwand verbunden sind und die miteinander längs einer Kante (78) verbunden sind, wodurch eine Veränderung der Richtung der beiden Ströme möglich wird.

7. Anlage nach einem der Ansprüche 1 bis 6, **dadurch gekennzeichnet,** daß die Rückwand (32) im Bereich jeder der beiden Kammern (68, 70) wenigstens ein Verteilungsorgan (80, 82) enthält, mit dem die Ausströmrichtung des Luftstroms verändert werden kann.

8. Anlage nach einem der Ansprüche 1 bis 7, **dadurch gekennzeichnet,** daß die Rückwand (32) herausnehmbar ist.

9. Anlage nach einem der Ansprüche 1 bis 8, **dadurch gekennzeichnet,** daß das Gehäuse (30) einen Sitz bildet, der sich zur direkten Aufnahme eines Wärmeaustauschers (90), insbesondere eines Verdampfers, eignet und in diesem Falle eine Leitung (92) zur Abführung der Kondensate enthält.

10. Anlage nach einem der Ansprüche 1 bis 9, außerdem enthaltend eine Mischklappe (108), mit der die vom Ausströmteil (72) ausgehende Luft zwischen einem Frischluftarm (98) und einem Lufterwärmungsarm (100) verteilt werden kann, **dadurch gekennzeichnet,** daß die Klappe (108) um eine Achse (110) parallel zur Einleitungsrichtung der beiden Ströme (F1 und F2) in den Einströmteilen (52, 54) des Gehäuses (30) schwenkbar angeordnet ist.

## Claims

1. A heating and/or air conditioning installation for a motor vehicle, comprising two air fans (56, 58), adapted to deliver two respective streams of fresh air to a common heat exchanger (90) within a housing (30), characterised in that the housing (30) defines two inlet sections (52, 54), which are disposed facing each other and which are adapted to be connected respectively to the two fans, whereby to introduce the two air streams into the housing, in inlet directions (F1 and F2) which are parallel and opposed to each other, and parallel to a base wall (32) of the housing (30), and in that the base wall (32) is provided with a separating bulkhead (60) which projects into the housing (30) and which extends in a general direction close to the inlet direction of the two streams along the base wall (32), so as to define two chambers (68, 70) which extend over substantially the same width in the said inlet direction and which exhaust into an outlet section (72) which is adapted to be connected to the heat exchanger.

2. An installation according to Claim 1, characterised in that the housing (30) is of generally paraellelepipedic shape and includes a rectangular base wall (32) and four side walls joined to the base wall, namely two longitudinal side walls (36, 38) and two transverse side walls (40, 42), in that the two inlet sections (52, 54) are defined respectively in the two transverse walls (40, 42), and in that the four side walls together define a rectangular open face (72) which constitutes the said outlet section of the housing.

3. An installation according to Claim 1 or Claim 2, in which the base wall (32) is of generally rectangular shape, characterised in that the general direction of the bulkhead (60) corresponds substantially to the direction of a diagonal of the rectangle.

4. An installation according to Claim 3, characterised in that the bulkhead (60) comprises a central portion (62) which extends in a general direction corresponding to a diagonal of the rectangle and which is extended by two incurved terminal portions (64, 66), which terminate on two opposed sides of the rectangle corresponding to the longitudinal walls (36, 38).

5. An installation according to Claim 3, characterised in that the bulkhead (160) comprises a single rectilinear portion, which extends in a direction close to that of a diagonal of the rectangle and which terminates on two opposed sides of the rectangle corresponding to the transverse walls (36, 38) of the housing.

6. An installation according to one of Claims 1 to 5, characterised in that the bulkhead (60) includes two rounded faces (74, 76), which are joined to the base wall and which are joined together along an edge (78), whereby to change the direction of the two streams.

7. An installation according to one of Claims 1 to 6, characterised in that the base wall (32) comprises, in the region of each of the two chambers (68, 70), at least one splitter member (80, 82) which is adapted to change the direction of flow of the air stream.

8. An installation according to one of Claims 1 to 7, characterised in that the base wall (32) is removable.

9. An installation according to one of Claims 1 to 8, characterised in that the housing (30) defines a mounting adapted for directly receiving a heat exchanger (90), in particular an evaporator, and includes in that case a duct (92) for evacuation of the condensates.

10. An installation according to one of Claims 1 to 9, further including a mixing valve (108) which is adapted to distribute the air delivered from the outlet section (72), between a fresh air transmission branch (98) and an air heating branch (100), characterised in that the valve (108) is pivotally mounted about an axis (110) parallel to the direction in which the two streams (F1 and F2) are introduced into the inlet sections (52, 54) of the housing (30).
